(19) **Europäisches Patentamt / European Patent Office / Office européen des brevets**

(11) **EP 2 204 980 B1**

(12) **EUROPEAN PATENT SPECIFICATION**

(45) Date of publication and mention
of the grant of the patent:
**18.05.2011 Bulletin 2011/20**

(51) Int Cl.:
***H04N 1/60*** *(2006.01)*

(21) Application number: **09000022.5**

(22) Date of filing: **02.01.2009**

(54) **Image processing system, imaging system, and microscope imaging system**

Bildverarbeitungssystem, Abbildungssystem und Mikroskopabbildungssystem

Système de traitement d'images, système d'imagerie et système d'imagerie de microscope

(84) Designated Contracting States:
**DE**

(43) Date of publication of application:
**07.07.2010 Bulletin 2010/27**

(73) Proprietor: **Olympus Corporation**
**Shibuya-ku**
**Tokyo 151-0072 (JP)**

(72) Inventor: **Aizaki, Shinichiro**
**Tokyo 151-0072 (JP)**

(74) Representative: **von Hellfeld, Axel**
**Wuesthoff & Wuesthoff**
**Patent- und Rechtsanwälte**
**Schweigerstrasse 2**
**81541 München (DE)**

(56) References cited:
**EP-A- 1 578 140**     **JP-A- 2007 014 010**
**US-A1- 2005 275 911**     **US-A1- 2008 018 735**

**Description**

**Background of the Invention**

**Field of the Invention**

The present invention relates to an imaging system and a microscope imaging system for capturing subject images or images observed with a microscope with an image pickup device such as a CCD, and for displaying and recording the images, and to an image processing system used in the above systems. The present invention particularly relates to color compensation processing and contrast correction processing of the systems.

**Description of the Related Art**

Conventionally, a method for colometrically improving color reproductivity by using tristimulus values of a subject in image processing systems, imaging systems, and microscope imaging systems has been widely known. However, because this method does not take human visual perception property into account, problems such as foggy images and differences in color from the original colors have been frequently pointed out.

Japanese Patent Application Publication No. 2005-117612 and Japanese Patent Application Publication No. 2005-210370 disclose techniques that are methods for improving the visual quality while taking the human visual perception property into account. The techniques in these documents employ processing based on CIECAM02, which is a CIE Color Appearance Model (CIECAM) of the International Commission on Illumination (CIE), in order to improve the visual quality.

The processing based on the CIECAM02 is computed with the following formula. First, the observation environment is classified into three surrounds: Average, Dim, and Dark. Given that the luminance of the white color around the observation subject is $L_{SW}$, the luminance of the white color of the observation subject is $L_{DW}$, and $S_R = L_{SW}/L_{DW}$, the surround is Average at $S_R \geq 0.2$, is Dim at $0 < S_R < 0.2$, and is Dark at $S_R = 0$.

For each of the surrounds, c, Nc, and F are determined by the table below.

| Surround | c | Nc | F |
|---|---|---|---|
| Average | 0.69 | 1.0 | 1.0 |
| Dim | 0.59 | 0.9 | 0.9 |
| Dark | 0.525 | 0.8 | 0.8 |

In order to convert the tristimulus values XYZ into lightness J, Chroma C, and hue angle h by means of CIECAM02, the tristimulus values are first converted into RGB spaces with an MCAT02 matrix.

$$\begin{pmatrix} R \\ G \\ B \end{pmatrix} = M_{CAT02} \cdot \begin{pmatrix} X \\ Y \\ Z \end{pmatrix} \qquad (1)$$

$$M_{CAT02} = \begin{pmatrix} 0.7328 & 0.4296 & -0.1624 \\ -0.7036 & 1.6975 & 0.0061 \\ 0.0030 & 0.0136 & 0.9834 \end{pmatrix} \qquad (2)$$

The degree of incomplete chromatic adaptation D is calculated next.

$$D = F \cdot \left[ 1 - \left( \frac{1}{3.6} \right) \cdot \exp\left[ \frac{-(L_A + 42)}{92} \right] \right] \tag{3}$$

Chromatic adaptation is calculated by using D.

$$R_C = \left[ \left( Y_W \cdot \frac{D}{R_W} \right) + (1 - D) \right] \cdot R \tag{4}$$

$$G_C = \left[ \left( Y_W \cdot \frac{D}{G_W} \right) + (1 - D) \right] \cdot G \tag{5}$$

$$B_C = \left[ \left( Y_W \cdot \frac{D}{B_W} \right) + (1 - D) \right] \cdot B \tag{6}$$

Here, $R_W$, $G_W$, and $B_W$ are RGB values of the white color of an observation subject, and the white color tristimulus values $R_W$, $G_W$, and $B_W$ are multiplied with an $M_{CAT02}$ matrix.
Next, observation condition parameters are calculated.

$$k = \frac{1}{(5L_A + 1)} \tag{7}$$

$$F_L = 0.2k^4 (5L_A) + 0.1(1 - k^4)^2 (5L_A)^{\frac{1}{3}} \tag{8}$$

$$n = \frac{Y_b}{Y_W} \tag{9}$$

$$N_{bb} = N_{cb} = 0.725 \left( \frac{1}{n} \right)^{0.2} \tag{10}$$

$$z = 1.48 + \sqrt{n} \tag{11}$$

The values obtained from Equation (4) through Equation (6) are converted into Hunt-Pointer-Estevez space.

$$\begin{pmatrix} R' \\ G' \\ B' \end{pmatrix} = M_{HPE} \cdot M_{CAT02}^{-1} \cdot \begin{pmatrix} R_C \\ G_C \\ B_C \end{pmatrix} \qquad (12)$$

$$M_{HPE} = \begin{pmatrix} 0.38971 & 0.68898 & -0.07868 \\ -0.22981 & 1.18340 & 0.04641 \\ 0.00000 & 0.00000 & 1.00000 \end{pmatrix} \qquad (13)$$

$$M_{CAT02}^{-1} = \begin{pmatrix} 1.096124 & -0.278869 & 0.182745 \\ 0.454369 & 0.473533 & 0.072098 \\ -0.009628 & -0.005698 & 1.015326 \end{pmatrix} \qquad (14)$$

A nonlinear transform is applied to R', G', and B'.

$$R_a' = \frac{400(F_L R'/100)^{0.42}}{27.13 + (F_L R'/100)^{0.42}} + 0.1 \qquad (15)$$

$$G_a' = \frac{400(F_L G'/100)^{0.42}}{27.13 + (F_L G'/100)^{0.42}} + 0.1 \qquad (16)$$

$$B_a' = \frac{400(F_L B'/100)^{0.42}}{27.13 + (F_L B'/100)^{0.42}} + 0.1 \qquad (17)$$

When R', G', and B' are negative values, absolute values are used and -1 is multiplied before adding 0.1.
Next, a, b, and h are calculated.

$$a = R_a' - 12G_a'/11 + B_a'/11 \qquad (18)$$

$$b = (1/9)(R_a' + G_a' - 2B_a') \qquad (19)$$

$$h = \tan^{-1}(b/a) \qquad (20)$$

$$h_r = h \cdot 180 / \pi \tag{22}$$

$$
\begin{aligned}
h &= h_r, &&\text{if} && a \geq 0, b \geq 0 \\
h &= h_r + 180 &&\text{if} && a < 0, b \geq 0 \\
h &= h_r + 180 &&\text{if} && a < 0, b < 0 \\
h &= h_r + 360 &&\text{if} && a \geq 0, b < 0
\end{aligned}
\tag{23}
$$

Next, $e_t$ is calculated.

$$e_t = 1/4 \left[ \cos\left( h \frac{\pi}{180} + 2 \right) + 3.8 \right] \tag{24}$$

Next, A is calculated.

$$A = \left[ 2R'_a + G'_a + (1/20)B'_a - 0.305 \right] N_{bb} \tag{25}$$

Next, lightness J is calculated.

$$J = 100 (A / A_W)^{cz} \tag{26}$$

Next, t is calculated for a calculation of C.

$$t = \frac{(50000/13) N_c N_{cb} e_t \sqrt{a^2 + b^2}}{R'_a + G'_a + (21/20)B'_a} \tag{27}$$

Chroma C is calculated.

$$C = t^{0.9} \sqrt{J/100} \left(1.64 - 0.29^n\right)^{0.73} \tag{28}$$

As given above, lightness J, chroma C and hue angle h are calculated.

Next, tristimulus values when the lightness J, chroma C and hue angle h calculated above are observed in different environments is calculated by means of an inverse transform.

First, i that results in $h_i \leq h' \leq h_{i+1}$ is selected from the following table, and its corresponding $h_i$, $e_i$, and $H_i$ are obtained.

|   | Red | Yellow | Green | Blue | Red |
|---|-----|--------|-------|------|-----|
| I | 1 | 2 | 3 | 4 | 5 |

(continued)

|  | Red | Yellow | Green | Blue | Red |
|---|---|---|---|---|---|
| $h_i$ | 20.14 | 90.00 | 164.25 | 237.53 | 380.14 |
| $e_i$ | 0.8 | 0.7 | 1.0 | 1.2 | 0.8 |
| $H_i$ | 0.0 | 100.0 | 200.0 | 300.0 | 400.0 |

$$h' = \frac{(H - H_i)(e_{i+1}h_i - e_i h_{i+1}) - 100 h_i e_{i+1}}{(H - H_i)(e_{i+1} - e_i) - 100 e_{i+1}} \tag{29}$$

$$h = (h' - 360) \quad \text{if} \quad h' > 360, \quad \text{otherwise} \quad h = h' \tag{30}$$

t, e, $P_1$, $P_2$, and $P_3$ are calculated.

$$t = \left( \frac{C}{\sqrt{J/100}\,(1.64 - 0.29^n)^{0.73}} \right)^{\frac{1}{0.9}} \tag{31}$$

When t is 0, a and b are 0, and $P_2$ only is calculated.

$$e_t = \frac{1}{4}\left( \cos\left( h\frac{\pi}{180} + 2 \right) + 3.8 \right) \tag{32}$$

$$A = A_W \left( J/100 \right)^{\frac{1}{cz}} \tag{33}$$

$$p_1 = \frac{(50000/13) N_c N_{cb} e_t}{t} \tag{34}$$

$$p_2 = \left( A/Nbb \right) + 0.305 \tag{35}$$

$$p_3 = \frac{21}{20} \tag{36}$$

a and b are calculated.

$$h_r = h\frac{\pi}{180} \tag{37}$$

if $|\sin(h_r)| \geq |\cos(h_r)|$

$$p_4 = \frac{p_1}{\sin(h_r)} \tag{38}$$

$$b = \frac{p_2(2 + p_3)(460/1403)}{p_4 + (2 + p_3)(220/1403)[\cos(h_r)/\sin(h_r)] - (27/1403) + p_3(6300/1403)} \tag{39}$$

$$a = b[\cos(h_r)/\sin(h_r)] \tag{40}$$

if $|\sin(h_r)| < |\cos(h_r)|$

$$p_5 = \frac{p_1}{\cos(h_r)} \tag{41}$$

$$a = \frac{p_2(2 + p_3)(460/1403)}{p_5 + (2 + p_3)(220/1403) - [(27/1403) - p_3(6300/1403)][\sin(h_r)/\cos(h_r)]} \tag{42}$$

$$b = a[\sin(h_r)/\cos(h_r)] \tag{43}$$

$$R'_a = \frac{460}{1403}p_2 + \frac{451}{1403}a + \frac{288}{1403}b \tag{44}$$

$$G'_a = \frac{460}{1403}p_2 - \frac{891}{1403}a - \frac{261}{1403}b \tag{45}$$

$$B'_a = \frac{460}{1403} p_2 - \frac{220}{1403} a - \frac{6300}{1403} b \tag{46}$$

R', G', and B' are calculated.

$$R' = \frac{100}{F_L} \left( \frac{27.13 |R'_a - 0.1|}{400 - |R'_a - 0.1|} \right)^{\frac{1}{0.42}} \tag{47}$$

$$G' = \frac{100}{F_L} \left( \frac{27.13 |G'_a - 0.1|}{400 - |G'_a - 0.1|} \right)^{\frac{1}{0.42}} \tag{48}$$

$$B' = \frac{100}{F_L} \left( \frac{27.13 |B'_a - 0.1|}{400 - |B'_a - 0.1|} \right)^{\frac{1}{0.42}} \tag{49}$$

If any one of $(R'_a-0.1)$, $(G'_a-0.1)$, or $(B'_a-0.1)$ is a negative value, the corresponding R', G', or B' is also a negative value. $R_c$, $G_c$, and $B_c$ are calculated.

$$\begin{pmatrix} R_c \\ G_c \\ B_c \end{pmatrix} = M_{CAT02} \cdot M_{HPE}^{-1} \cdot \begin{pmatrix} R' \\ G' \\ B' \end{pmatrix} \tag{50}$$

$$M_{HPE}^{-1} = \begin{pmatrix} 1.910197 & -1.112124 & 0.201908 \\ 0.370950 & 0.629054 & -0.000008 \\ 0.000000 & 0.000000 & 1.000000 \end{pmatrix} \tag{51}$$

Finally, RGB and XYZ are calculated.

$$R = \frac{R_c}{\left( Y_W \, {}^{D}\!/_{R_W} + 1 - D \right)} \tag{52}$$

$$G = \frac{G_c}{\left( Y_W \frac{D}{G_W} + 1 - D \right)} \qquad (53)$$

$$B = \frac{B_c}{\left( Y_W \frac{D}{B_W} + 1 - D \right)} \qquad (54)$$

$$\begin{pmatrix} X \\ Y \\ Z \end{pmatrix} = M_{CAT02}^{-1} \begin{pmatrix} R \\ G \\ B \end{pmatrix} \qquad (55)$$

From the above calculations, the tristimulus values XYZ that reflect the visual effect of the second observation environment can be obtained.

Document US 2005/0275911 A1 discloses an image processing method and an image processing device, wherein an image forming device comprises an image input unit, an image processing unit and an image output unit. The image processing unit includes a preferred color reproduction processing unit, an appearance faithful reproduction processing unit and a flare correction section. The preferred color reproduction processing unit comprises a contrast and chroma conversion unit composed of a color appearance forward conversion unit and a color appearance inverse conversation unit, and image viewing condition setting units. The calorimetric values obtained from the preferred color reproduction processing unit are input to the appearance faithful reproduction processing unit. The appearance faithful reproduction processing unit includes an image viewing condition acquisition unit, a reproduced image viewing condition acquisition unit and an appearance faithful reproduction conversion unit, wherein the appearance faithful reproduction conversion unit performs a forward conversion by using the image viewing conditions and performs inverse conversion by using the reproduced image viewing conditions to obtain calorimetric values of the converted image. The conversions are performed by using the CIECAM02 Color Appearance Model. The calorimetric values obtained by the appearance faithful reproduction processing unit are input to the flare correction section to correct the amount of flare of the calorimetric values and to obtain the calorimetric values to be output as the reproduced image. Further, the image processing unit can include a color conversion table creating section, which comprises a 3DLUT generation section. The 3DLUT generation section uses the output calorimetric values from the preferred color reproduction processing unit, the appearance faithful reproduction processing unit and the flare correction section, to generate a three-dimensional color conversion table (3DLUT). The thus made color conversion table is used to obtain digital image data allowing the appearance of the original images to be preferably and faithfully color-reproduced.

Document US 2008/0018735 A1 describes a microscope color image pickup apparatus comprising an image pickup unit, a camera characteristic information storage unit, a color correction parameter calculation unit and a signal processing unit which includes a color correcting unit. Further, a color correction matrix is calculated and is set in the color correcting unit. The color correcting unit applies the color correction matrix to the input signal for performing a color correction process on the color image captured by the image pickup unit according to the color correction parameters. The converted signal is displayed as a moving picture on a display unit and a control unit records the image data as a static image from the signal processing unit in a record unit.

Moreover, document EP 1 578 140 A2 discloses a system and a method for color management, wherein the system comprises an image capture device, a processor subsystem and a target image displayer. The processor subsystem includes a forward transformed for transforming a digital image from a device dependent color space to a device independent color space, a forward appearance modeler for applying an appearance model (CIECAM02), a gamut mapper for mapping the color gamut of an image input color space to a color gamut of a display image output color space, an inverse appearance modeler and an inverse transformer. The obtained processed image is displayed on the target image displayer for comparison to a reference image displayed on a reference image displayer. Further, a color transformer is provided for performing the color transformation steps of the system using a look up table (LUT).

**Summary of the Invention**

The present invention provides an image processing system as defined in claim 1 and an imaging system according to claim 3.

Further, the present invention provides a microscope imaging system according to claim 7.

Further aspects of the invention are explained in the depending claims.

An image processing system according to the embodiment of the present invention comprises an image data acquisition unit for acquiring captured image data, a first image processing unit for performing first image processing relating to color correction and gradation correction on the image data, a second image processing unit for performing second image processing relating to color correction based on a Color Appearance Model on the image data, a parameter calculation unit for calculating an image processing parameter used in the first image processing from the image data before the second image processing and the image data after the second image processing, and a control unit for setting the image processing parameter to the first image processing unit.

An imaging system according to the embodiment of the present invention comprises an image pickup device for generating image data by means of receiving an optical image of a subject and converting the optical image into an electrical signal; a first image processing unit for performing first image processing relating to color correction and gradation correction on the image data; a second image processing unit for performing second image processing relating to color correction based on a Color Appearance Model on the image data; a parameter calculation unit for calculating an image processing parameter used in the first image processing from the image data before the second image processing and the image data after the second image processing; and a control unit for setting the image processing parameter to the first image processing unit, a display unit for displaying an image on which the first or second image processing is performed, and a record unit for recording an image on which the first or second image processing is performed.

A microscope imaging system according to the embodiment of the present invention comprises a microscope; an image pickup device for generating image data by means of receiving an optical image from the microscope and converting the optical image into an electrical signal; a first image processing unit for performing first image processing relating to color correction and gradation correction on the image data; a second image processing unit for performing second image processing relating to color correction based on a Color Appearance Model on the image data; a parameter calculation unit for calculating an image processing parameter used in the first image processing from the image data before the second image processing and the image data after the second image processing; and a control unit for setting the image processing parameter to the first image processing unit, a display unit for displaying an image on which the first or second image processing is performed, and a record unit for recording an image on which the first or second image processing is performed.

**Brief Description of the Drawings**

Fig. 1 is a block diagram illustrating an overview of a configuration of an image processing system and an imaging system having the image processing system according to the first embodiment;

Fig. 2 shows a correlation between luminance signals of RGB interpolation image data (x-axis) and luminance signals of Color Appearance image data (y-axis);

Fig. 3 shows a correlation between luminance signals of Color Appearance image data (x-axis) and luminance signals of RGB interpolation image data (y-axis);

Fig. 4 shows the RGB interpolation image data plotted in B-Y and R-Y space;

Fig. 5 shows data of Fig. 4 graphed in a grid, width 10 on a side, to create a meshed pattern, and the distribution of the frequency of plotted data in each square;

Fig. 6 shows a flow relating to the first embodiment;

Fig. 7 is a block diagram of an overview of a configuration of an image processing system and a microscope imaging system according to the second embodiment;

Fig. 8 is a block diagram of an overview of a configuration of the microscope imaging system according to the third embodiment; and

Fig. 9 is a block diagram of the image processing program that is installed in each PC in the microscope imaging system according to the third embodiment.

**Description of the Preferred Embodiments**

The image processing system according to the present invention has an image data acquisition unit, a first image processing unit, a second image processing unit, a parameter calculation unit, and a control unit.

The image data acquisition unit is for acquiring captured image data. The image data acquisition unit corresponds to, in this example, a signal processing unit 6 in the following embodiment.

A first image processing unit performs first image processing that relates to color correction and gradation correction on the image data. The first image processing unit corresponds to, in this example, color conversion matrix correction and gradation correction 9 in the signal processing unit 6 in the following embodiment.

A second image processing unit performs second image processing that relates to color correction based on the Color Appearance Model on the image data. The second image processing unit corresponds to, in this example, a Color Appearance Model unit calculation unit 15 in the following embodiment.

A parameter calculation unit calculates image processing parameters that are used for the first image processing on the basis of image data before applying the second image processing and image data after applying the second image processing. The parameter calculation unit corresponds to, in this example, a color matrix/gradation parameter calculation unit 24 in the following embodiment.

A control unit sets the image processing parameters to the first image processing unit. The control unit corresponds to, in this example, a control unit 12 in the following embodiment.

By using the above units, parameters are calculated in the first image processing unit, which requires easier and more approximate calculation, to realize correction on the basis of the Color Appearance Model, which requires a large amount of calculation that is performed in the second image processing unit, and the parameters are set to the first image processing unit. As a result, real-time image processing based on the Color Appearance Model can be performed.

At that time, the image data before applying the second image processing is RGB image data. The image data after applying the second image processing is Color Appearance image data. The parameter calculation unit compares the RGB image data with the Color Appearance image data. The parameter calculation unit calculates, as the image processing parameters, a calculation of color matrix information used in the color correction in the first image processing and gradation parameters used in the gradation correction.

As a result, the color matrix information and the gradation parameters are calculated as image processing parameters.

When the acquired image is displayed in real time, the image is displayed after the first image processing of the first image processing unit on the basis of the image processing parameters. When the acquired image is recorded, the image is recorded after the second image processing of the second image processing unit.

As a result, moving images and still images that are corrected on the basis of the Color Appearance Model can be displayed in a display unit or recorded in a recording unit.

Details of the embodiments of the present invention are provided below.

<First Embodiment>

As shown in the formulae above, in the technique based on the CIECAM02, matrix operation and nonlinear operation are repeated. For that reason, processing of image data acquired in an image pickup device requires a large amount of calculation and takes long time.

The present embodiment provides an image processing system, an imaging system, and a microscope imaging system that can reproduce the visual quality of a subject precisely and that can process image data acquired from an image pickup device in real time or in a relatively short time.

The following image processing system is explained as the present embodiment. When recording moving images, the image processing system performs the color matrix correction/gradation correction of Color Appearance Model operation that is approximated in accordance with the subject on the moving images. As a result, the visual quality of the moving images can be approximately and precisely reproduced. In addition, the processing is performed in a relatively short time.

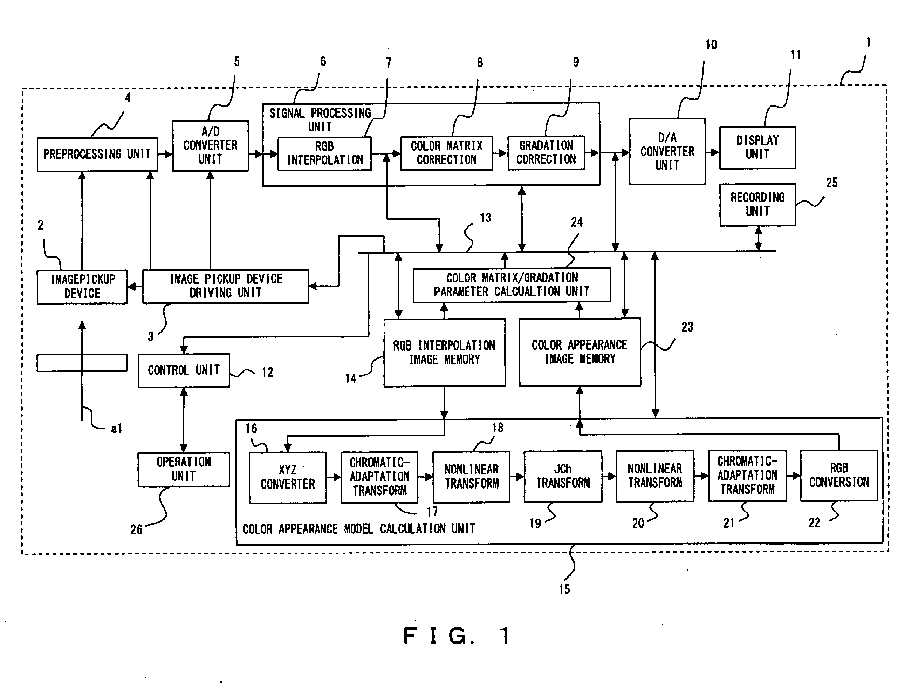

Fig. 1 is a block diagram illustrating an overview configuration of an image processing system and an imaging system having the image processing system according to the first embodiment of the present invention.

In Fig. 1, a numerical reference 1 indicates the imaging system to which a subject image captured by a lens not shown in the drawing enters along an optical path a1. An image pickup device 2 such as CCD is placed as an image pickup unit at a position where the subject image is projected.

The image pickup device 2 is driven in an exposure time on the basis of a driving signal from an image pickup device driving unit 3 and outputs an output signal to a preprocessing unit 4. The preprocessing unit 4 converts the output signals from the image pickup device 2 into video signals and outputs the signals to an A/D converter unit 5 by means of control pulses provided from the image pickup device driving unit 3. The A/D converter unit 5 digitalizes the signals from the preprocessing unit 4 on the basis of clock signals from the image pickup device driving unit 3.

The video signals digitalized in the A/D converter unit 5 are input into the signal processing unit 6. The signal processing unit 6 performs signal processing such as RGB interpolation 7, color correction based on a color conversion matrix 8, and gradation correction 9 of the input video signals. The signals output from the signal processing unit 6 are converted into analog signals by a D/A converter unit 10, and displayed in a display unit 11 as moving images.

Meanwhile, in accordance with the instructions from the control unit 12, the image data after applying the RGB interpolation 7 in the signal processing unit 6 is stored in an RGB interpolation image memory 14.

The image is sent further to a Color Appearance Model calculation unit 15, and is converted into an XYZ image in an XYZ converter unit 16.

the XYZ converter unit 16 converts RGB images captured in CCD into tristimulus value XYZ images by means of matrix operation. The matrix can be calculated from color patches illuminated by illumination light. Color characteristics of the color patches are known and characteristics of the illumination light are also known.

Chromatic-adaptation transform is applied to the XYZ images converted in the XYZ converter unit 16 in a chromatic-adaptation unit 17. The operation in the transform is the same as in equation (1) through equation (6) of the conventional art. Nonlinear transform is, then, applied to the chromatic-adaptation-transformed image data in a nonlinear transform unit 18. The operation in this transform is the same as in equation (12) through equation (17) of the conventional art.

Next, the image data transformed in the nonlinear transform unit 18 is converted with JCh transform in a JCh transform unit 19. The operation is the same as in equation (18) through equation (28) of the conventional art.

The image data transformed in the JCh transform unit 19 is further nonlinearly transformed in a nonlinear transform unit 20. The operation is the same as in equation (31) thorough equation (49) of the conventional art.

Chromatic-adaptation transform is further applied to the image data transformed in the nonlinear transform unit 20 in a chromatic-adaptation transform unit 21 and is converted into XYZ image data. The operation is the same as in equation (50) through equation (55) of the conventional art. The XYZ image data converted with chromatic-adaptation transform in chromatic-adaptation transform unit 21 is converted into RGB data in an RGB conversion unit 22. If the display unit is an sRGB standard monitor, for example, the RGB data is obtained from the following operations.

$$\begin{pmatrix} R \\ G \\ B \end{pmatrix} = \begin{pmatrix} 3.2406 & -1.5372 & -0.4986 \\ -0.9689 & 1.8758 & 0.0415 \\ 0.0557 & -0.2040 & 1.0570 \end{pmatrix} \begin{pmatrix} X \\ Y \\ Z \end{pmatrix} \qquad (56)$$

If $R, G, B \leq 0.03108$

$$\begin{aligned} R'_{sRGB} &= 12.92 \times R \\ G'_{sRGB} &= 12.92 \times G \\ B'_{sRGB} &= 12.92 \times B \end{aligned} \qquad (57)$$

else if $R, G, B > 0.0031308$

$$\begin{aligned} R'_{sRGB} &= 1.055 \times R^{(1.0/2.4)} - 0.055 \\ G'_{sRGB} &= 1.055 \times G^{(1.0/2.4)} - 0.055 \\ B'_{sRGB} &= 1.055 \times B^{(1.0/2.4)} - 0.055 \end{aligned} \qquad (58)$$

$$R_{8bit} = round(255.0 \times R'_{sRGB})$$

$$G_{8bit} = round(255.0 \times G'_{sRGB})$$

$$B_{8bit} = round(255.0 \times B'_{sRGB})$$

Luminance information, white color information, background information, and surround information of the first observation environment at the time of image capture, and luminance information, white color information, background information, and surround information of the second observation environment are input from an operation unit 26 to the control unit 12. The second observation environment is an environment in which scenes displayed in a display unit 25 are observed with the human eye. Parameters in each unit of the Color Appearance Model unit calculation unit 15 can be set on the basis of the instruction from the control unit 12.

Meanings of each piece of the environment information and its corresponding parameter are provided below.

First Environment (at the time of image capture)

Luminance information: $L_A$ average luminance of the scenes of the image subject and its surrounding

White color information: $X_W Y_W Z_W$ tristimulus values of reference white color of the image subject

Background information: $Y_b$ luminance of the background of the image subject

Surround information: category names determined on the basis of the ratio of the luminance of the image subject to the luminance of its surroundings: three categories, Average, Dim, and Dark, are represented

Second Environment (at the time of observation)

Luminance information: $L_A$ average luminance of the scenes of the observed subject and its surrounding

White color information: $X_W Y_W Z_W$ tristimulus values of reference white color of the observed subject

Background information: $Y_b$ luminance of the background of the observed subject

Surround information: category names determined based on the ratio of the luminance of the observed subject to the luminance of its surroundings: three categories, Average, Dim, and Dark, are represented

The first environment parameters are parameters used in the calculation in the chromatic-adaptation transform unit 17, the nonlinear transform unit 18, and the JCh transform unit 19. The second environment parameters are parameters used in the calculation in the nonlinear transform unit 20 and chromatic-adaptation transform unit 21.

The image data output from the Color Appearance Model calculation unit 15 is stored in a Color Appearance image memory 23.

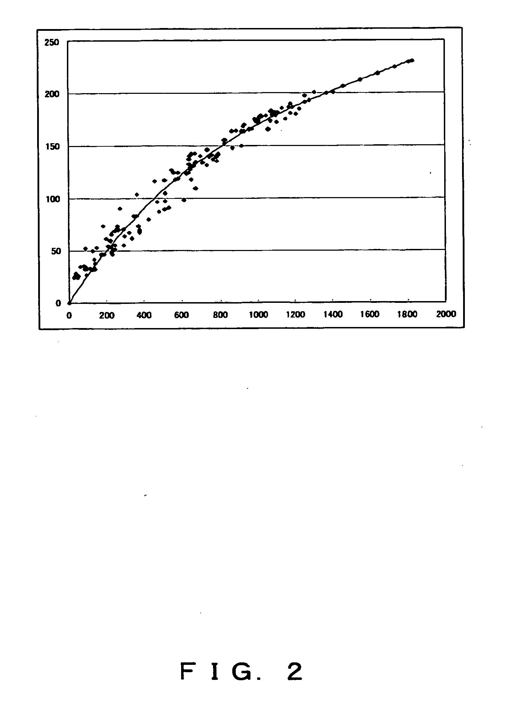

The color matrix/gradation parameter calculation unit 24 compares the RGB interpolation image data stored in the RGB interpolation image memory 14 with the Color Appearance image data stored in the Color Appearance image memory 23. The color matrix/gradation parameter calculation unit 24 calculates a color matrix used in the color matrix correction unit 8 of the signal processing unit 6 and gradation parameters used in the gradation correction unit 9. An example of the calculation is that the gradation correction data is obtained from comparison between luminance values of a pixel that is common to both of the RGB interpolation image data and the Color Appearance image data. When the luminance signal of the RGB interpolation image data is on x-axis ($Y_{x,y}=0.3R_{x,y}+0.59G_{x,y}+0.11B_{x,y}$) and the luminance signal of the Color Appearance image data is on y-axis ($Y'_{x,y}=0.3R'_{x,y}+0.59G'_{x,y}+0.11B'_{x,y}$) the correlation shown in Fig. 2 can be obtained. An approximate line of this distribution is calculated. The calculated approximate line is set to the gradation correction unit as gradation correction data.

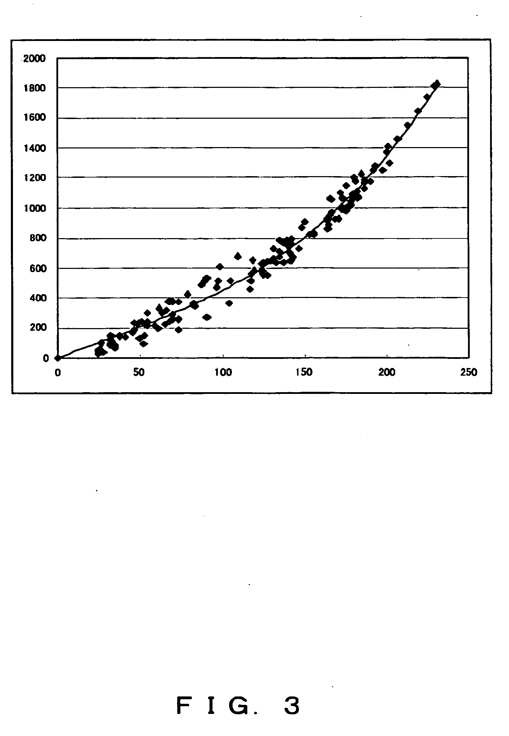

Furthermore, when the luminance signal of the Color Appearance image data is on the x-axis and the luminance signal of the RGB interpolation image data is on the y-axis, the correlation shown in Fig. 3 can be obtained. An approximate line of this distribution is calculated. Gradation conversion of the Color Appearance image data is performed by using the calculated approximate line.

The RGB interpolation image data is represented by RGBin and the gradation-converted Color Appearance image data is represented by RGBout. The color matrix M to be calculated has a relation of

$$RGBout = M \bullet RGBin$$

RGBout and RGBin indicate RGB data of each pixel, and are represented by a 3xn matrix as below.

$$RGBin = \begin{pmatrix} R_{0,0} & R_{0,1} & R_{0,2} & \cdots & R_{1,0} & R_{1,1} & R_{1,2} & \cdots & R_{x,y} & \cdots \\ G_{0,0} & G_{0,1} & G_{0,2} & \cdots & G_{1,0} & G_{1,1} & G_{1,2} & \cdots & G_{x,y} & \cdots \\ B_{0,0} & B_{0,1} & B_{0,2} & \cdots & B_{1,0} & B_{1,1} & B_{1,2} & \cdots & B_{x,y} & \cdots \end{pmatrix}$$

$$RGBout = \begin{pmatrix} R'_{0,0} & R'_{0,1} & R'_{0',2} & \cdots & R'_{1,0} & R'_{1,1} & R'_{1,2} & \cdots & R'_{x,y} & \cdots \\ G'_{0,0} & G'_{0,1} & G'_{0,2} & \cdots & G'_{1,0} & G'_{1,1} & G'_{1,2} & \cdots & G'_{x,y} & \cdots \\ B'_{0,0} & B'_{0,1} & B'_{0,2} & \cdots & B'_{1,0} & B'_{1,1} & B'_{1,2} & \cdots & B'_{x,y} & \cdots \end{pmatrix}$$

Here, n is the number of pixels of an input image when all pixels of the input image are considered.

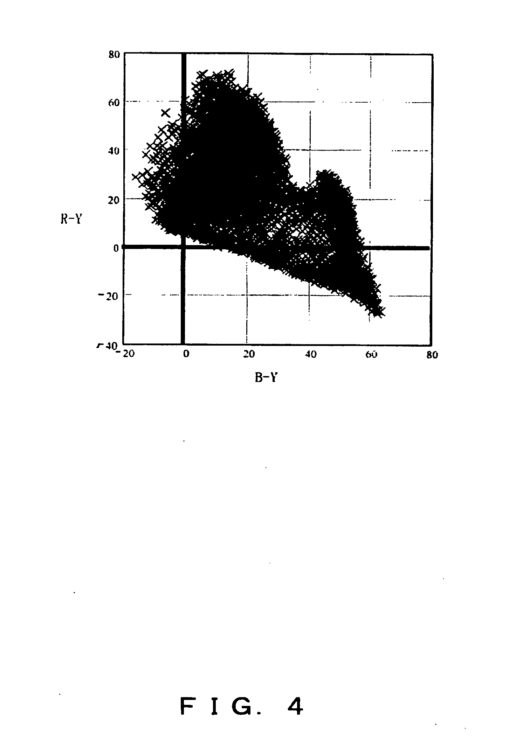

It is also possible to limit the number of n by extracting representative colors in the image. For example, plotting of the RGB interpolation image data in B-Y and R-Y space appears as shown in Fig. 4.

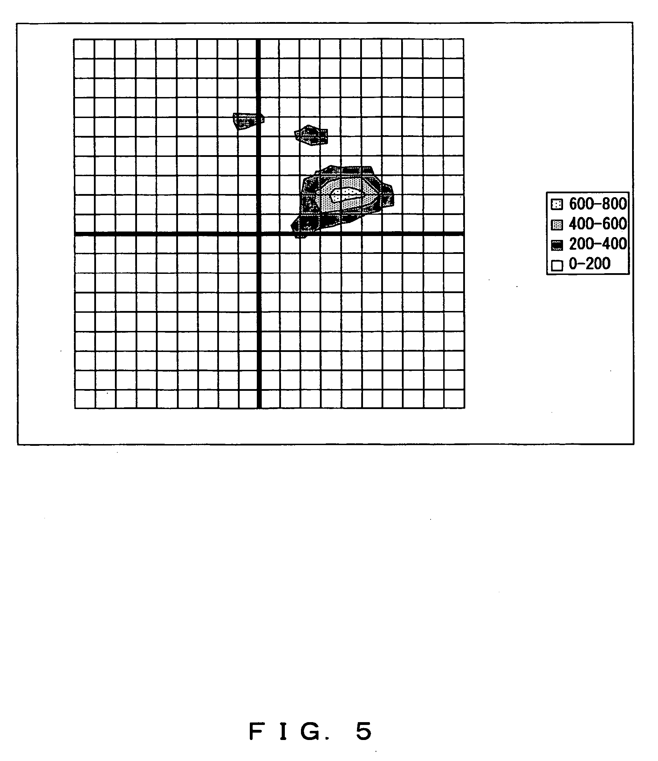

In Fig. 4, x-axis-y-axis space is ruled in squares, width 10 on a side, to create a meshed pattern, and the frequency of plotted data in each square is obtained. The distribution of the frequency is shown in Fig. 5. It is also possible that by obtaining center colors in every square, the RGB interpolation image data corresponding to the colors and the Color Appearance image data at a coordinate having the colors are selected as representative colors. In the case of Fig. 5, for example, since there are 53 frequently plotted squares n can be limited to 53.

Alternately, rather than simply obtaining the center color in each square, by setting a threshold of the frequency and selecting the squares that have a certain frequency or greater, the center colors of the squares are selected as respective representative colors.

M is calculated on the basis of the above equation.

$$M = RGBout \bullet (RGBin)^{-1}$$

Note that since RGBin is not holomorphic, it is calculated by least-squares estimation.

The color matrix and the gradation parameters, which are calculated in the above manner, are set to the color matrix correction unit 8 and the gradation correction unit 9, respectively, in the signal processing unit 6 via a bus 13, on the basis of the instruction of the control unit 12.

The control unit 12 records the image data from the signal processing unit 6 or the image data from the Color Appearance Model calculation unit 15 in the recording unit 25 as still image data or moving image data via the bus 13.

Next, the workings of the present embodiment are explained.

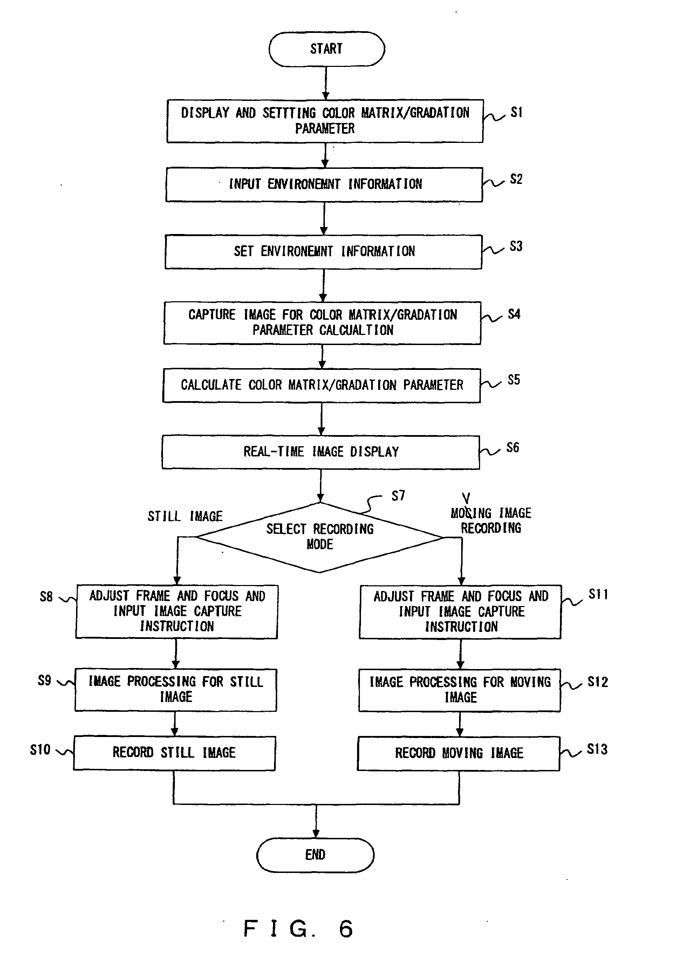

Fig. 6 shows a flow relating to the present embodiment. An operator, prior to capturing images of a subject, sends and instruction to set each of the parameters in the color matrix correction unit 8 and the gradation correction unit 9 in the signal processing unit 6 on a setting screen shown by the display unit 11 using the operation unit 26 (S1).

Next, the operator inputs the environment information of the subject and the environment information of the display unit to the operation unit 26 (S2). Upon receiving the input from the operation unit 26, the control unit 12 sets the first and second environment information to the Color Appearance Model calculation unit 15 as described above (S3).

The operator subsequently captures images of the subject for calculation of parameters of the color matrix correction 8 and the gradation correction 9 (S4) .

After the RGB interpolation processing 7, the images are stored in the RGB interpolation image memory 14 via the bus 13. After the calculation in the Color Appearance Model calculation unit 15, as described above, the images are stored in the Color Appearance image memory 23. In the color matrix/gradation parameter calculation unit 24, the color matrix and gradation parameters are calculated and set (S5).

A subject image intended by the operator is displayed in the display unit 11, and the subject image is processed by using the color matrix and gradation parameters set in real time (S6).

The operator, next, selects a still image record or a moving image record (S7) . If a still image record is selected, the operator adjusts the framing and the focus when aimed at an intended subject, and inputs a still image capture instruction to the operation unit 26 (S8) .

Upon receiving the input from the operation unit 26, the control unit 12 sends the image after RGB interpolation processing 7 to the RGB interpolation image memory 14. The image is calculated in the Color Appearance Model calculation unit 15 (S9). The calculated image is stored in the Color Appearance image memory 23 and is recorded in the recording unit 25 via the bus 13 (S10) .

When a moving image is selected, on the other hand, the operator adjusts the framing and the focus when aimed at an intended subject, and inputs a moving image capture instruction to the operation unit 26 (all) .

Upon receiving the input from the operation unit 26, the control unit 12 performs RGB interpolation 7, color matrix correction 8, and gradation correction 9 in the signal processing unit 6 (S12) . Via the bus 13, the control unit 12 records the corrected data to the recording unit 25 as moving image data (S13) . Then, the image capture operation is completed.

As explained above, Color Appearance Model calculation is performed by using approximate color matrix correction and gradation correction in accordance with the subject. For that reason, the visual quality of the moving images can be approximately and precisely reproduced, and, in addition, processing precisely reflecting the color appearance calculation can be performed on still images.

In the embodiment above, in a case of recording a moving image, an image processing in the signal processing unit 6 is recorded. However, the present invention is not limited to this manner. For example, a moving image of the RGB interpolated image after RGB interpolation processing 7 can be recorded once in the recording unit 25. Each of the images constituting the moving image is, afterwards, processed in the Color Appearance Model calculation unit 15 and a moving image can be reconstructed from these processed images and is recorded again.

According to this modification, although the real-time feature of the moving image is reduced, moving images processed with a further precise Color Appearance Model can be obtained.

<Second Embodiment>

In this embodiment, a case in which the first embodiment is applied to the microscope imaging system is explained.

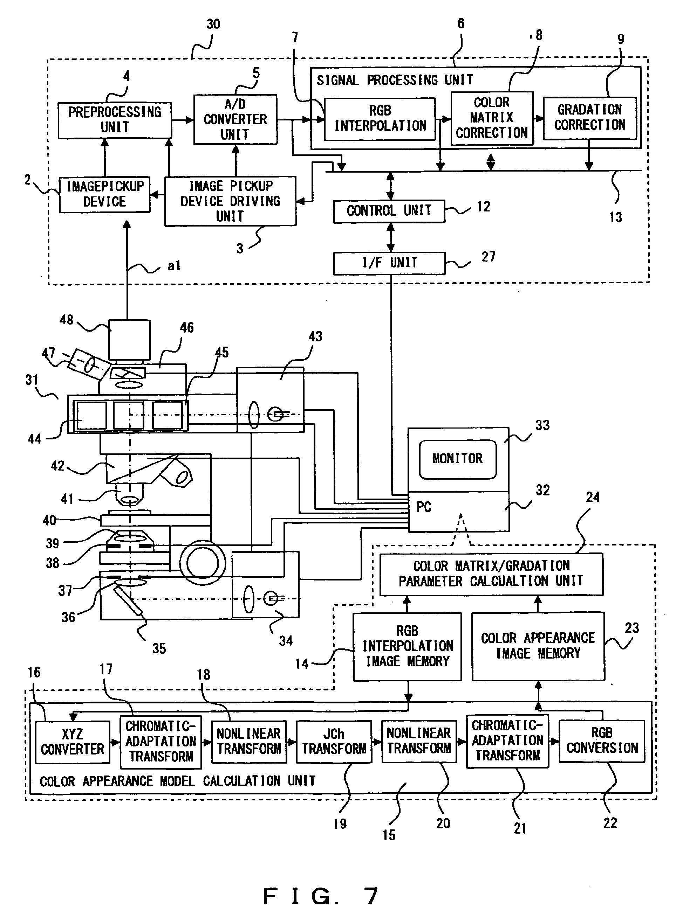

Fig. 7 is a block diagram of overview configurations of an image processing system and a microscope imaging system according to the second embodiment of the present invention. In Fig. 7, the same reference numbers are assigned to the units that are the same as units in Fig. 1.

In the present embodiment, an imaging system is attached to a microscope 31. The Color Appearance Model calculation unit 15, the color matrix/gradation parameter calculation unit 24, the RGB interpolation image memory 14, and the Color Appearance image memory 23 are provided in a personal computer (hereinafter abbreviated as PC) 32. The PC 32 has a monitor 33. The PC 32 also has display, record, and operation functions that are the same as the imaging system in Fig. 1.

In Fig. 7, the reference number 31 represents a body of the microscope. The microscope body 31 allows visual observation of an observed image of a sample, which is not shown in the drawing, and can output the observed image to the outside along an observation optical path a1. On the observation optical path a1 outside of the microscope body 31, an image sensing device 2 such as CCD is placed as an image capture unit at a position where the observed image is projected from the microscope body 31.

The microscope 31 has a transmissive illumination light source 34, a mirror 35, a lens 36, a field stop 37, an aperture stop 38, a condenser lens 39, a stage 40, object lenses 41, an object revolver 42, an epi-illumination light source 43, fluorescent cubes 44, a turret 45, a trinocular lens barrel 46, an eye lens 47, and a camera adapter 48. The object lenses 41 are set in the object revolver 42. The fluorescent cubes 44 are set in the turret 45.

The trinocular lens barrel 46 allows selection of the following optical paths: an optical path for outputting 100% to the eye lens 47, an optical path for assigning 50% to the eye lens 47 and another 50% to the camera adaptor 48, or an optical path for outputting 100% to the camera adaptor 48.

The transmissive illumination light source 34, the field stop 37, the aperture stop 38, the object revolver 42, the epi-illumination light source 43, the turret 45, and the trinocular lens barrel 46 are connected to the PC 32. The PC 32 can detect the state of these connected devices. Note that the transmissive illumination light source 34, the field stop 37, the aperture stop 38, the object revolver 42, the epi-illumination light source 43, the turret 45, and the trinocular lens barrel 46 can be electrically driven, and operations of these devices can be controlled by the PC 32.

Next, the effect of the present embodiment is explained. In the present embodiment, the first environment information is calculated and set in accordance with the setting of the microscope 31 and the observation method of a sample. In order to calculate the first environment information, the setting information corresponding to the microscope setting is recorded in advance.

When transmissive bright field observation is selected, the color and luminance of the light source are obtained from the setting voltage in the transmissive illumination light source 34. If the light source is a halogen lamp, and an infrared cut filter and a light balance filter (not shown in the drawing) are provided in the optical path, the luminance obtains the state described below in accordance with the voltage value of the light source. When the light source voltage is 6V, $X_W Y_W Z_W$=(4.47, 4.57, 2.72) . When the light source voltage is 9V, $X_W Y_W Z_W$=(24.9, 25.9, 20.1). When the light source voltage is 12V, $X_W Y_W Z_W$= (61.6, 65.3, 61.7) .

Next, the transmissive illumination light described above is corrected in accordance with the aperture diameter of the aperture stop 38, the object lens 41, and the optical path setting of the trinocular lens barrel 46. In a case of the transmissive bright field observation of the microscope 31, the illumination light itself is observed in the part where the sample is not present. Accordingly, the background $Y_b$ of the first environment should be the corrected transmissive illumination light. In addition, the corrected transmissive illumination light itself can be the white color information.

Next, the aperture diameter of the field stop 37 is compared with the observation field. If the diameter of the field stop is greater than the field, the size of the observation field is selected. If the diameter of the field stop is smaller than the observation field, the diameter of the field stop is selected. The luminance information of the first environment is calculated from a ratio of the selected diameter to the field range observed from the eye lens 47 and the luminance of the corrected illumination light.

In a case of the microscope 31, when the sample is observed through the eye lens 47, the surrounding of the observation image is black. In this case, the surround information of the first environment information can be set as Dark.

As the environment information of the second environment, as with the first embodiment, environment information of the environment in which the display 33 of the PC 32 is placed is input.

Calculation/setting of the color matrix/gradation parameters, moving image recording, and still image recording are the same as those of the first embodiment.

When the fluorescent observation is selected, the luminance of the scene and the luminance of the background in a field of the eye lens 47 are calculated from the optical path setting of the trinocular lens barrel 46 and from the image, exposure time, and gain obtained in the imaging system 30. In the fluorescent observation, since white color is not present in the first environment, a white color that is a reference at the time of bright field observation is set. For example, $X_W Y_W Z_W$=(24.9, 25.9, 20.9) is set as a reference white by applying a 9V voltage to the halogen lamp and by using the light balance filter. Since the surrounding of the observation image is black like the bright field, the surround information of the first environment is set as Dark.

According to the present embodiment, the environment information can be calculated and set from the setting information of the microscope 31, facilitating the operations of the operator.

<Third Embodiment>

In the present embodiment, the environment information of the second environment is set in accordance with the display environment when observing the image with PC or projectors.

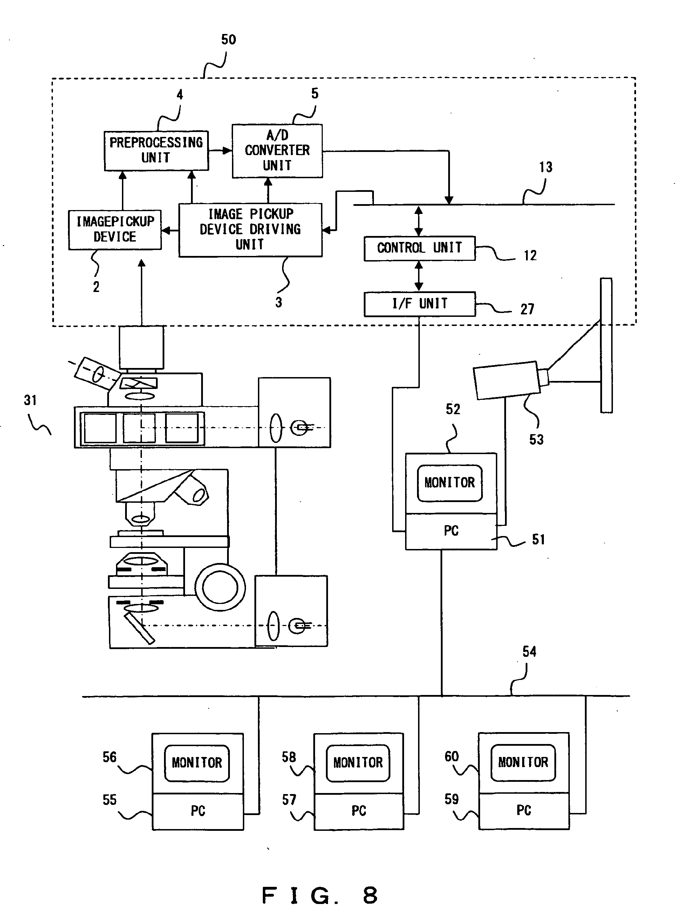

Fig. 8 is a block diagram of an overview configuration of the microscope imaging system according to the third embodiment of the present invention. In the present embodiment, a projector 53 is connected to a PC 51 that controls the imaging system. In addition, a plurality of PCs 55, 57, and 59 are connected to the PC 51 via a network 54.

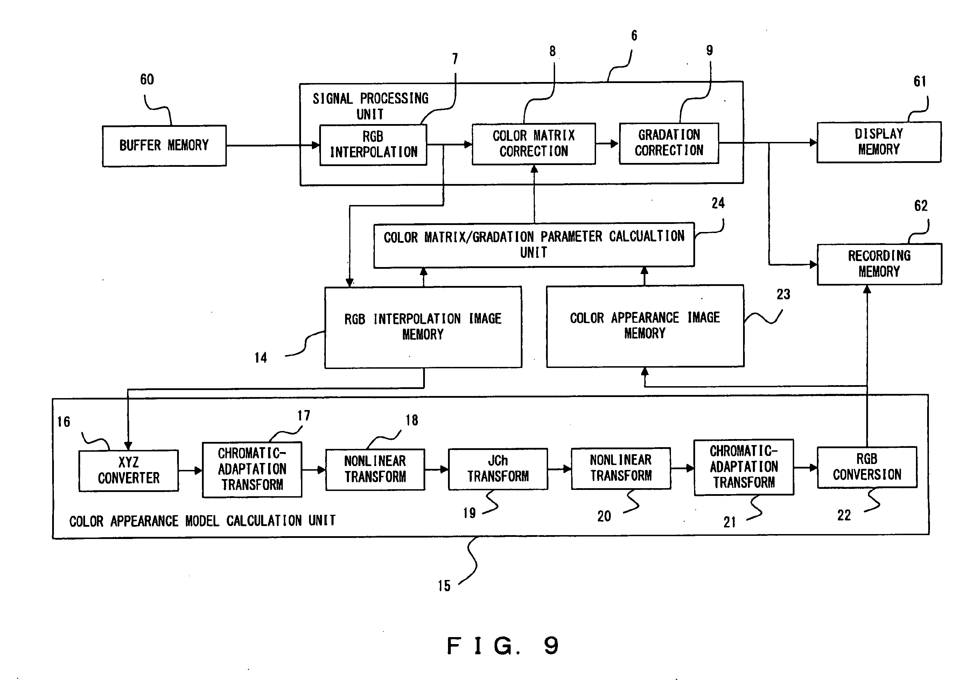

Fig. 9 is a block diagram of the image processing program that is installed in each PC in the microscope imaging system according to the third embodiment of the present invention. From an imaging device body 50, RAW data is output via an I/F 27, and all image processing is executed in the PC 51. There are two types of image processing programs shown in Fig. 9 programmed in the PC 51 that controls the imaging system. For that reason, the PC 51 can set different second environments separately to the monitor 52 and the projector 53.

Each of the PCs connected to the network has one type of the image processing programs shown in Fig. 9 installed. The RAW data is input via the PC 51 that controls the imaging system and the network 54.

When the RAW data is input in the PC 51, 55, 57, and 59, it is stored in buffer memory 60. Afterwards, processing is executed in the signal processing unit 6 and in the Color Appearance Model calculation unit 15, which is similar to the first and second embodiments. The processed image data is stored in display memory 61 or recording memory 62.

Such a constitution allows input of the environment information of the second environment in accordance with the display environment when observing the image with a PC or projectors. As a result, processing based on the Color Appearance Model, calculation and setting of the color matrix/gradation parameters, and processing, recording and displaying of moving/still images are executed in the same manner as those in the first and second embodiments.

The present embodiment allows image processing based on the Color Appearance Model in accordance with the environment where PC or projectors are placed. For that reason, images with a high visual quality can be displayed.

As described above, the image processing system according to the embodiments of the present invention has the first image processing unit and the second image processing unit. The first image processing unit corrects color and gradation. The second image processing unit executes correction based on the Color Appearance Model. Such a constitution allows the image processing system to calculate and set image processing parameters of the first image processing unit based on the input image data and the output image data of the second image processing unit.

In the above image processing system, the first image processing unit performs image processing for real-time display and the second image processing unit performs image processing for recording.

Such a constitution allows for easier calculation and setting of parameters in an approximate manner in the first image processing unit so as to realize a correction in the second image processing unit on the basis of the Color Appearance Model that requires a large amount of calculation. As a result, image processing reflecting the Color Appearance Model can be performed in real time.

The above image processing system can be an imaging system or a microscope imaging system. At this time, the output image of the first image processing unit can be displayed in the display unit or recorded in the recording unit as a moving image. The output image of the second image processing unit can be displayed in the display unit or recorded in the recording unit as a still image.

Such a constitution allows displaying in the display unit or recording in the recording unit of moving images and still images corrected on the basis of the Color Appearance Model.

In the above imaging system or in the microscope, images recorded in the recording unit as moving images are processed in the second image processing unit. Afterwards, the recoded images are reconstructed as moving images and reproduced in the display unit.

Such a constitution allows recording/reproduction of moving images processed to perform correction based on the Color Appearance Model.

Here, the first observation environment is an observation environment in which scenes captured by image pickup device are observed by the human eye. The second observation environment is an environment in which scenes displayed in a display unit are observed by the human eye. In this case, the correction based on the Color Appearance Model employs luminance information, white color information, background information, and surround information of the first observation environment and luminance information, white color information, background information, and surround information of the second observation environment.

Such a constitution allows the luminance information, white color information, background information, and surround information of the first observation environment and the luminance information, white color information, background information, and surround information of the second observation environment to be reflected in the correction based on the Color Appearance Model. As a result, the correction can be performed so as to be appropriate to the conditions of the observation environment.

The microscope has an object lens, an illumination light source, a condenser lens, an aperture stop, a field stop, and a trinocular lens barrel. The microscope imaging system further has an input unit and a control unit. The input unit inputs in the control unit the setting status of any one of a combination of an object lens, an illumination light source, a condenser lens, an aperture stop, a field stop, and a trinocular lens barrel. The control unit calculates the luminance of scenes observed with the human eye and sets the calculated luminance in the second image processing unit.

Such a constitution allows for calculation of luminance information of the first environment from the setting conditions of the microscope. As a result, the luminance information of the first environment is set to the second image processing unit without a need for special operations by an observer.

The above microscope system further has a control unit. The control unit calculates the luminance of an eye lens observation optical path based on an ocular observation path, optical split information of a camera observation optical path, and setting information of an output image, exposure time and sensitivity of the image pickup device. The control unit also calculates luminance of the scenes observed by the human eye, and sets the luminance in the second image processing unit.

Such a constitution allows for the calculation of luminance of the ocular observation optical path from the setting of an output image, the exposure time, and the sensitivity of the image pickup device and the optical split information. As a result, the luminance information of the first environment can be set to the second image processing unit without the need for special operations by an observer.

The imaging system and microscope imaging system can reflect each observation environment to the correction processing based on the Color Appearance Model.

Such a constitution reflects environment information to the correction processing based on the Color Appearance Model for every observation environment. The precious image corresponding to each observation environment is obtained.

The microscope imaging system can calculate background information of the first environment from the setting conditions of a microscope in bright field observation. The microscope imaging system can also calculate the background information from the average luminance of the captured images in fluorescent observation or dark field observation.

Such a constitution allows for calculation of luminance information of the first environment for each observation method. As a result, the luminance information of the first environment can be set to the second image processing unit without the need for special operations by an observer.

The microscope imaging system can transmit image data as surround information of the first observation environment to a plurality of observation systems after assigning "dark" to the output data.

Such a constitution allows constant transmission of surround information of the first observation environment, which is suitable for the ocular observation environment of the microscope, to the observation system.

The use of the present invention enables precise reproduction of visual quality of the subject and real-time or relatively short-time processing of image data obtained with an imaging device.

It should be noted that the present invention is not limited to the embodiments provided above, but various configuration or embodiments can be made within the scope of the gist of the present invention.

## Claims

1.  An image processing system comprising:

    - an image pickup device (2) for acquiring first image data and second image data ;
    - an RGB interpolation unit (7) for generating first RGB interpolated image data using the acquired first image data and generating second RGB interpolated image data using the acquired second image data ;

    the image processing system being **characterized by**:

    - a second image processing unit (15) for performing, color correction on the first RGB interpolated image data by using a Color Appearance Model;
    - a parameter calculation unit (24) for calculating a color matrix and a gradation parameter as the image processing parameters by comparing the first RGB interpolated image data input to the second image processing unit and the Color Appearance image data output by the second image processing unit; and
    - a control unit (12) for setting the calculated image processing parameters to a first image processing unit;
    - a first image processing unit (8,9) for performing color correction and gradation correction on the second RGB interpolated image data by using the calculated image processing parameters.

2.  The image processing system according to claim 1, wherein
    when the second acquired image is displayed in real time, the image is displayed after the first image processing is performed on, the image by the first image processing unit (8, 9) on the basis of the image processing parameter, when the second acquired image is recorded, the image is recorded after the second image processing is performed on the image by the second image processing unit (15).

3.  An imaging system comprising:

    an image pickup device (2) for generating image data by means of receiving an optical image of a subject and converting the optical image into an electrical signal;
    a display unit (11, 33) for displaying an image on which the first or second image processing is performed;
    a record unit (25, 32, 62) for recording an image on which the first or second image processing is performed; and
    an image processing system according to any one of claims 1 to 2.

4.  The imaging system according to claim 3, wherein
    the second image processing unit (15) is further adapted to extract a moving image captured by the image pickup device (2) and recorded in the record unit (25, 32, 62), to reconstruct the images as a moving image after the second image processing is performed on each of the images constituting the moving image, and to output the moving image to the display unit (it, 33).

5.  The imaging system according to claim 3, wherein
    the correction using the Color Appearance Model is adapted to use luminance information, white color information, background information, and surround information of a first observation environment in which a scene captured by the image pickup device (2) is observed by a human eye, and luminance information, white color information, background information, and surround information of a second observation environment in which a scene displayed with the display unit (11, 33) is observed by a human eye.

6. The imaging system according to claim 5, further comprises
a plurality of observation devices (56, 58, 60) for displaying the captured image, wherein
the second image processing unit (15) is adapted to perform the second image processing based on the luminance information, white color information, background information, and surround information of the second observation environment in accordance with each of the observation devices (56, 58, 60).

7. A microscope imaging system, comprising:

a microscope (31); and
an imaging system according to any one of claims 3 to 6.

8. The microscope imaging system according to claim 7, further comprises
an input unit (32) for inputting information on a setting state of any one or a combination thereof of an object lens, an illumination light source, a condenser lens, an aperture stop, a field stop and a trinocular lens barrel provided in the microscope, wherein
the control unit (12) is adapted to calculate a luminance of a scene observed by a human eye and to set the luminance to the second image processing unit (15).

9. The microscope imaging system according to claim 8, wherein
the control unit (12) is adapted to calculate a luminance of an ocular observation optical path from optical split information of the ocular observation optical path and a camera observation optical path relating to the trinocular lens barrel and an output image, exposure time, and sensitivity setting of the image pickup device (2), to calculate a luminance of a scene observed by a human eye, and to set the luminance to the second image processing unit (15).

10. The microscope imaging system according to claim 9, wherein
the control unit (12) is adapted to calculate the background information of the first observation environment from the setting state of the microscope (31) in a bright field observation, and to calculate the background information of the first observation environment from an average luminance of the acquired image in a fluorescent observation or in a dark field observation.

11. The microscope imaging system according to claim 10, wherein
the control unit (12) is adapted to constantly set the surround information of the first observation environment to dark.


**Patentansprüche**

1. Bildverarbeitungssystem umfassend:

eine Bildaufnahmevorrichtung (2) zur Erfassung von ersten Bilddaten und zweiten Bilddaten;
eine RGB Interpolationseinheit (7) zur Erzeugung von ersten RGB interpolierten Bilddaten unter Verwendung der erfassten ersten Bilddaten und zur Erzeugung von zweiten RGB interpolierten Bilddaten unter Verwendung der erfassten zweiten Bilddaten;

wobei das Bildverarbeitungssystem **gekennzeichnet ist durch**:

eine zweite Bildverarbeitungseinheit (15) zur Durchführung einer Farbkorrektur an den ersten RGB interpolierten Bilddaten unter Verwendung eines Farberscheinungsmodells;
eine Parameterberechnungseinheit (24) zur Berechnung einer Farbmatrix und eines Gradierungsparameters als Bildverarbeitungsparameter **durch** Vergleichen der in die zweite Bildverarbeitungseinheit eingegebenen ersten RGB interpolierten Bilddaten mit den **durch** die zweite Bildverarbeitungseinheit ausgegebenen Farberscheinungsbilddaten; und
eine Steuereinheit (12) zum Einstellen der berechneten Bildverarbeitungsparameter zu einer ersten Bildverarbeitungseinheit;
eine erste Bildverarbeitungseinheit (8, 9) zur Durchführung einer Farbkorrektur und einer Gradierungskorrektur an den zweiten RGB interpolierten Bilddaten unter Verwendung der berechneten Bildverarbeitungsparameter.

2. Bildverarbeitungssystem nach Anspruch 1, wobei,
wenn das zweite erfasste Bild in Echtzeit angezeigt wird, das Bild angezeigt wird, nachdem die erste Bildverarbeitung an dem Bild durch die erste Bildverarbeitungseinheit (8, 9) auf der Basis der Bildverarbeitungsparameter durchgeführt wurde,
und, wenn das zweite erfasste Bild aufgezeichnet wird, das Bild aufgezeichnet wird, nachdem die zweite Bildverarbeitung an dem Bild durch die zweite Bildverarbeitungseinheit (15) durchgeführt wurde.

3. Bildgebungssystem umfassend:

eine Bildaufnahmevorrichtung (2) zur Erzeugung von Bilddaten durch Empfangen eines optischen Bilds eines Subjekts und Konvertieren des optischen Bilds in ein elektrisches Signal;
eine Anzeigeeinheit (11, 33) zum Anzeigen eines Bilds, an dem die erste oder zweite Bildverarbeitung durchgeführt wurde;
eine Aufzeichnungseinheit (25, 32, 62) zum Aufzeichnen eines Bilds, an dem die erste und zweite Bildverarbeitung durchgeführt wurde; und
ein Bildverarbeitungssystem nach einem der Ansprüche 1 bis 2.

4. Bildgebungssystem nach Anspruch 3, wobei
die zweite Bildverarbeitungseinheit (15) ferner dazu eingerichtet ist, ein durch die Bildaufnahmevorrichtung (2) erfasstes und in der Aufzeichnungseinheit (25, 32, 62) aufgezeichnetes Bewegungsbild zu extrahieren, die Bilder als ein Bewegungsbild zu rekonstruieren, nachdem die zweite Bildverarbeitung an jedem der das Bewegungsbild aufbauenden Bilder durchgeführt wurde, und das Bewegungsbild auf der Anzeigeeinheit (11, 33) auszugeben.

5. Bildgebungssystem nach Anspruch 3, wobei
die Korrektur unter Verwendung des Farberscheinungsmodels dazu eingerichtet ist, eine Luminanzinformation, eine Weißfarbenininformation, eine Hintergrundinformation und eine Umgebungsinformation einer ersten Beobachtungsumgebung, in welcher eine durch die Bildaufnahmevorrichtung (2) erfasste Szene von einem menschlichen Auge beobachtet wird, und eine Luminanzinformation, eine Weißfarbeninformation, eine Hintergrundinformation und eine Umgebungsinformation einer zweiten Beobachtungsumgebung, in welcher eine mit der Anzeigeeinheit (11, 33) angezeigte Szene von einem menschlichen Auge beobachtet wird, zu verwenden.

6. Bildgebungssystem nach Anspruch 5, ferner umfassend
eine Mehrzahl von Beobachtungsvorrichtungen (56, 58, 60) zum Anzeigen des erfassten Bilds, wobei
die zweite Bildverarbeitungseinheit (15) dazu eingerichtet ist, die zweite Bildverarbeitung auf der Basis der Luminanzinformation, der Weißfarbeninformation, der Hintergrundinformation und der Umgebungsinformation der zweiten Beobachtungsumgebung nach Maßgabe jeder der Beobachtungsvorrichtungen (56, 58, 60) durchzuführen.

7. Mikroskopbildgebungssystem, umfassend:

ein Mikroskop (31); und
ein Bildgebungssystem nach einem der Ansprüche 3 bis 6.

8. Mikroskopbildgebungssystem nach Anspruch 7, ferner umfassend
eine Eingabeeinheit (32) zur Eingabe einer Information über einen Einstellungszustand einer Objektivlinse, einer Beleuchtungslichtquelle, einer Kondensorlinse, einer Öffnungsblende, einer Sehfeldblende und/oder eines in dem Mikroskop vorgesehenen Trinokularlinsengehäuses, wobei
die Steuereinheit (12) dazu eingerichtet ist, eine Luminanz einer von einem menschlichen Auge beobachteten Szene zu berechnen und die Luminanz in der zweiten Bildverarbeitungseinheit (15) einzustellen.

9. Mikroskopbildgebungssystem nach Anspruch 8, wobei
die Steuereinheit (12) dazu eingerichtet ist, eine Luminanz eines optischen Okularbeobachtungswegs aus einer optischen Abspaltinformation des optischen Okularbeobachtungswegs und eines optischen Kamerabeobachtungswegs bezogen auf das Trinokularlinsengehäuse und ein Ausgabebild, eine Belichtungszeit und eine Empfindlichkeitseinstellung der Bildaufnahmevorrichtung (2) zu berechnen, eine Luminanz einer durch ein menschliches Auge beobachteten Szene zu berechnen und die Luminanz in der zweiten Bildverarbeitungseinheit (15) einzustellen.

**10.** Mikroskopbildgebungssystem nach Anspruch 9, wobei
die Steuereinheit (12) dazu eingerichtet ist, die Hintergrundinformation der ersten Beobachtungsumgebung aus dem Einstellungszustand des Mikroskops (31) in einer Hellfeldbeobachtung zu berechnen und die Hintergrundinformation der ersten Beobachtungsumgebung aus einer mittleren Luminanz des erfassten Bildes in einer Fluoreszenzbeobachtung oder in einer Dunkelfeldbeobachtung zu berechnen.

**11.** Mikroskopbildgebungssystem nach Anspruch 10, wobei
die Steuereinheit (12) dazu eingerichtet ist, die Umgebungsinformation der ersten Beobachtungsumgebung ständig auf dunkel zu setzen.


**Revendications**

**1.** Système de traitement d'images comprenant :

- un dispositif de capture d'images (2) pour acquérir des premières données d'image et des deuxièmes données d'image ;
- une unité d'interpolation RVB (7) pour générer des premières données d'image interpolées RVB en utilisant les premières données d'image acquises et générer des deuxièmes données d'image interpolées RVB en utilisant les deuxièmes données d'image acquises ;

le système de traitement d'images étant **caractérisé par** :

- une deuxième unité de traitement d'image (15) pour exécuter une correction de couleurs sur les premières données d'image interpolées RVB en utilisant un Modèle d'Aspect Chromatique ;
- une unité de calcul de paramètres (24) pour calculer une matrice de couleurs et un paramètre de graduation comme les paramètres de traitement d'image en comparant les premières données d'image interpolées RVB entrées dans la deuxième unité de traitement d'image et les données d'image d'Aspect Chromatique délivrées en sortie par la deuxième unité de traitement d'image ; et
- une unité de commande (12) pour fixer les paramètres de traitement d'image calculés dans une première unité de traitement d'image ;
- une première unité de traitement d'image (8, 9) pour exécuter une correction de couleurs et une correction de graduation sur les deuxièmes données d'image interpolées RVB en utilisant les paramètres de traitement d'image calculés.

**2.** Système de traitement d'images selon la revendication 1, dans lequel
lorsque la deuxième image acquise est affichée en temps réel, l'image est affichée après que le premier traitement d'image a été exécuté sur l'image par la première unité de traitement d'image (8, 9) sur la base du paramètre de traitement d'image,
lorsque la deuxième image acquise est enregistrée, l'image est enregistrée après que le deuxième traitement d'image a été exécuté sur l'image par la deuxième unité de traitement d'image (15).

**3.** Système d'imagerie comprenant :

un dispositif de capture d'images (2) pour générer des données d'image au moyen de la réception d'une image optique d'un sujet et de la conversion de l'image optique en un signal électrique ;
une unité d'affichage (11, 33) pour afficher une image sur laquelle le premier ou le deuxième traitement d'image est exécuté ;
une unité d'enregistrement (25, 32, 62) pour enregistrer une image sur laquelle le premier ou le deuxième traitement d'image est exécuté ; et
un système de traitement d'images selon l'une quelconque des revendications 1 à 2.

**4.** Système d'imagerie selon la revendication 3, dans lequel
la deuxième unité de traitement d'image (15) est en outre adaptée à extraire une image animée capturée par le dispositif de capture d'images (2) et enregistrée dans l'unité d'enregistrement (25, 32, 62), pour reconstruire les images comme une image animée après que le deuxième traitement d'image a été exécuté sur chacune des images constituant l'image animée, et pour délivrer en sortie l'image animée à l'unité d'affichage (11, 33).

**5.** Système d'imagerie selon la revendication 3, dans lequel
la correction en utilisant le Modèle d'Aspect Chromatique est adaptée à utiliser une information de luminance, une information de couleur blanche, une information d'arrière-plan, et une information d'environnement d'un premier environnement d'observation dans lequel une scène capturée par le dispositif de capture d'images (2) est observée par un oeil humain, et une information de luminance, une information de couleur blanche, une information d'arrière-plan, et une information d'environnement d'un deuxième environnement d'observation dans lequel une scène affichée avec l'unité d'affichage (11, 33) est observée par un oeil humain.

**6.** Système d'imagerie selon la revendication 5, comprenant en outre
une pluralité de dispositifs d'observation (56, 58, 60) pour afficher l'image capturée, dans lequel
la deuxième unité de traitement d'image (15) est adaptée à exécuter le deuxième traitement d'image sur la base de l'information de luminance, de l'information de couleur blanche, de l'information d'arrière-plan, et de l'information d'environnement du deuxième environnement d'observation conformément à chacun des dispositifs d'observation (56, 58, 60).

**7.** Système d'imagerie par microscope, comprenant :

> un microscope (31) ; et
> un système d'imagerie selon l'une quelconque des revendications 3 à 6.

**8.** Système d'imagerie par microscope selon la revendication 7, comprenant en outre
une unité d'entrée (32) pour entrer une information sur un état de réglage de l'un quelconque ou d'une combinaison d'un objectif, d'une source de lumière d'éclairage, d'une lentille de condenseur, d'un diaphragme, d'un diaphragme de champ et d'un barillet de trinoculaire prévus dans le microscope, dans lequel
l'unité de commande (12) est adaptée à calculer une luminance d'une scène observée par un oeil humain et à fixer la luminance dans la deuxième unité de traitement d'image (15).

**9.** Système d'imagerie par microscope selon la revendication 8, dans lequel
l'unité de commande (12) est adaptée à calculer une luminance d'un chemin optique d'observation oculaire à partir d'une information de séparation optique du chemin optique d'observation oculaire et d'un chemin optique d'observation par caméra se rapportant au barillet de trinoculaire et une image de sortie, un temps d'exposition, et un réglage de sensibilité du dispositif de capture d'image (2), à calculer une luminance d'une scène observée par un oeil humain et à fixer la luminance dans la deuxième unité de traitement d'image (15).

**10.** Système d'imagerie par microscope selon la revendication 9, dans lequel
l'unité de commande (12) est adaptée à calculer l'information d'arrière-plan du premier environnement d'observation à partir de l'état de réglage du microscope (31) dans une observation sur fond clair, et à calculer l'information d'arrière-plan du premier environnement d'observation à partir d'une luminance moyenne de l'image acquise dans une observation fluorescente ou dans une observation sur fond sombre.

**11.** Système d'imagerie par microscope selon la revendication 10, dans lequel
l'unité de commande (12) est adaptée à fixer de manière constante l'information d'environnement du premier environnement d'observation sur sombre.

F I G. 1

F I G.  2

F I G. 3

F I G. 4

F I G. 5

START

DISPLAY AND SETTTING COLOR MATRIX/GRADATION PARAMETER ~ S1

INPUT ENVIRONEMNT INFORMATION ~ S2

SET ENVIRONEMNT INFORMATION ~ S3

CAPTURE IMAGE FOR COLOR MATRIX/GRADATION PARAMETER CALCUALTION ~ S4

CALCULATE COLOR MATRIX/GRADATION PARAMETER ~ S5

REAL-TIME IMAGE DISPLAY ~ S6

SELECT RECORDING MODE — S7

STILL IMAGE

MOVING IMAGE RECORDING

ADJUST FRAME AND FOCUS AND INPUT IMAGE CAPTURE INSTRUCTION — S8

ADJUST FRAME AND FOCUS AND INPUT IMAGE CAPTURE INSTRUCTION ~ S11

IMAGE PROCESSING FOR STILL IMAGE — S9

IMAGE PROCESSING FOR MOVING IMAGE ~ S12

RECORD STILL IMAGE — S10

RECORD MOVING IMAGE ~ S13

END

F I G. 6

F I G. 7

F I G. 8

F I G. 9

EP 2 204 980 B1

## REFERENCES CITED IN THE DESCRIPTION

### Patent documents cited in the description

- JP 2005117612 A
- JP 2005210370 A
- US 20050275911 A1
- US 20080018735 A1
- EP 1578140 A2